# EUROPÄISCHE PATENTSCHRIFT

(11) **EP 2 894 065 B1**
(45) Veröffentlichungstag und Bekanntmachung des Hinweises auf die Patenterteilung: **30.08.2017**
(21) Anmeldenummer: 15153318.9
(22) Anmeldetag: 12.11.2012
(51) Int. Cl.: B60R 9/10

(54) **LASTENTRÄGER MIT EINEM LASTTRAGTEIL UND EINEM STÜTZELEMENT**
LOAD SUPPORT WITH A LOAD BEARING PART AND A SUPPORTING ELEMENT
SUPPORT DE CHARGE AVEC UNE PIÈCE PORTE-CHARGE ET UN ÉLÉMENT D'APPUI

(30) Priorität: 23.12.2011 DE 102011122284
(43) Veröffentlichungstag der Anmeldung: 15.07.2015
(62) Teilanmeldung aus: 12007645.0
(73) Patentinhaber: WESTFALIA - Automotive GmbH, 33378 Rheda-Wiedenbrück (DE)
(72) Erfinder: Recker, Andreas, 33617 Bielefeld (DE); Scheips, René, 33605 Bielefeld (DE)
(74) Vertreter: Patentanwälte Bregenzer und Reule Partnerschaftsgesellschaft mbB

(56) Entgegenhaltungen:
- US-A1- 2010 230 455
- US-A1- 2011 290 836

## Beschreibung

Die Erfindung betrifft einen Lastenträger für ein Kraftfahrzeug, insbesondere einen Personenkraftwagen, mit einem zum Tragen einer Last vorgesehenen Grundträger, der bei Gebrauch des Lastenträgers nach hinten vor einen Heckbereich des Kraftfahrzeugs vorsteht, gemäß dem Oberbegriff des Anspruchs 1.

Ein derartiger Lastenträger nach dem oberbegriff des Anspruchs 1 ist z.B. in US 2010/230455 A1 erläutert.

Ein weitererer Lastenträger ist z.B. in DE 10 2007 023 495 A1 erläutert. Bei solchen Lastenträgern ist es üblich, die Last beispielsweise mit Spanngurten oder dergleichen zu befestigen. Allerdings ist die Abstützung der Last, beispielsweise eines Rades, nicht in jedem Fall optimal. Somit ist es ein gewisses Risiko, dass sich die Last unbeabsichtigt von dem Lastenträger löst oder verrutscht, beispielsweise während der Fahrt, was ein erhebliches Sicherheitsrisiko darstellt.

Es ist daher die Aufgabe der vorliegenden Erfindung, bei einem Lastenträger der eingangs genannten Art ein verbessertes Konzept zur Befestigung der Last bereit zu stellen.

Zur Lösung der Aufgabe ist ein Lastenträger gemäß der technischen Lehre des Anspruchs 1 vorgesehen.

Es ist ein Grundgedanke der vorliegenden Erfindung, dass zur Abstützung der Last ein Stützelement beweglich an dem Lasttragteil, beispielsweise einer Fahrradträgerinne oder dergleichen, gelagert ist, so dass das Stützelement in seiner jeweiligen Stützposition beispielsweise eine rückseitige Stütze für die Last, zum Beispiel ein Rad des Fahrrades, bereitstellt. Das Stützelement ist jedoch nicht lose an dem Lasttragteil befestigt, sondern mittels einer Führungseinrichtung entlang der Längsachsrichtung verschieblich geführt, so dass es in eine geeignete Längsposition entlang der Längsachsrichtung des Tragabschnitts des Lasttragteils verstellt werden kann. Somit ist es möglich, das Stützelement in eine optimale Position zu bringen.

Das Stützelement ist in der jeweiligen Längsposition festlegbar, wofür eine Halteeinrichtung vorgesehen ist. Die Halteeinrichtung umfasst beispielsweise eine Rasteinrichtung, eine Riegeleinrichtung, eine Klemmeinrichtung oder dergleichen. Dementsprechend ist mindestens eine Raste und/oder mindestens ein Riegel und/oder mindestens eine Klemme vorgesehen. Es versteht sich, dass beliebige Kombinationen möglich sind, so dass beispielsweise das Stützelement zunächst mittels eines Riegels oder einer Raste festgelegt wird, anschließend noch zusätzlich verklemmt, was den Halt verbessert.

Die mindestens eine Raste, der Riegel, die Klemme oder dergleichen ist zweckmäßigerweise in eine das Stützelement bezüglich des Tragabschnitts festlegende Rastposition bzw. Verriegelungsposition oder Klemmenposition federbelastet. Beispielsweise ist eine Schenkelfeder vorgesehen, um die Raste oder den Riegel zu betätigen. Weiterhin ist es vorteilhaft, wenn der Riegel oder die Raste eine Bedienhandhabe zur manuellen Bedienung, beispielsweise zum Verriegeln oder auch zum Entriegeln, aufweist.

Selbstverständlich kann der Riegel, die Raste oder die Klemme am Lasttragteil oder, was bevorzugt ist, am Stützelement angeordnet sein.

Zur Aufnahme der Raste oder des Riegels ist zweckmäßigerweise eine Aufnahmekontur, beispielsweise eine Rastkontur oder eine Riegelaufnahme, vorgesehen.

Die Halteeinrichtung umfasst zweckmäßigerweise mindestens eine Zahnschiene oder Zahnreihe zur Verrastung mit der Raste. Somit ist eine große Anzahl von Verriegelungsposition oder Rastpositionen möglich.

Die Zahnschiene oder Zahnreihe könnte zwar prinzipiell an dem Stützelement angeordnet sein. Bevorzugt ist jedoch eine Ausführungsform, bei der die Zahnschiene oder Zahnreihe an dem Lasttragteil angeordnet ist. Besonders bevorzugt befindet sich die Zahnschiene oder Zahnreihe zwischen zwei Führungskonturen der Führungseinrichtung, an denen das Stützelement bzw. der Stützkörper geführt ist.

Die Zahnung ist beispielsweise in der Art einer Zahnschiene oder Zahnreihe ausgestaltet.

Die Zahnung umfasst beispielsweise eine Sägezahnstruktur. Die Sägezahnstruktur ist so orientiert, das eine Raste mit der Zahnung bei einem Verstellen des Stützelements in einem Sinne von der Last weg mit der Zahnung selbsttätig verrastet, beispielsweise aufgrund einer Federbelastung. In umgekehrter Richtung hingegen, das heißt wenn das Stützelement zur Last hin bewegt wird, gleitet die Raste über die Zahnung weg. Somit kann der Bediener das Stützelement durch eine einfache Bedienungshandlung in Richtung der Last, beispielsweise die Rückseite eines Rades, schieben. Das Stützelement bleibt von selbst in der jeweiligen Längsposition, da die Raste selbsttätig mit der Zahnung verrastet.

Das Stützelement ist zweckmäßigerweise als eine Art Stützkeil ausgestaltet oder umfasst einen Stützkeil.

Der Tragabschnitt umfasst zweckmäßigerweise eine Tragabschnitt-Stützfläche, während das Stützelement eine Stützelement-Stützfläche aufweist. Die beiden Stützflächen sind zweckmäßigerweise insgesamt oder insbesondere in einem Bereich, in dem sie aneinander angrenzen, schräg geneigt. Die Stützflächen weisen also vorteilhaft als Ganzes oder zumindest abschnittsweise eine Schrägneigung relativ zueinander auf. Die Stützflächen können plane Flächen sein, aber auch Rundungen aufweisen.

Das mindestens eine Lasttragteil weist vorteilhaft eine Rinne zur Aufnahme der Last, beispielsweise eines Rades eines Fahrrades, auf. Von einem Rinnenboden stehen dann Seitenschenkel ab, beispielsweise in der Gebrauchsstellung des Lasttragteils nach oben. Somit ist eine Art Mulde gebildet, die die Last sicher aufnimmt.

Die Seitenschenkel der Rinne des Lasttragteils bilden zweckmäßigerweise Führungskonturen der Führungseinrichtung.

Auch das Stützelement hat zweckmäßigerweise eine Rinne oder eine Aufnahmemulde. Diese Aufnahmemulde ist zweckmäßigerweise aus gerundet derart, dass ein Außenumfang eines Rades etwa in diesen Innenumfang der Aufnahmemulde passt. Die Aufnahmemulde ist also in einer Ebene, in der die Längsachse des Lasttragteils liegt, vorteilhaft rund.

Ein Boden der Aufnahmemulde des Stützelements und der Rinnenboden des Lasttragteils fluchten zweckmäßigerweise miteinander. Somit ist also eine Abstützung der Last in einer im Wesentlichen horizontalen Ebene durch den Rinnenboden gegeben. Schräg dazu verläuft vorteilhaft die Stützfläche des Stützelements, beispielsweise der Boden der Aufnahmemulde. Die Anordnung ist zweckmäßigerweise so getroffen, dass die Bodenflächen des Rinnenboden und der Aufnahmemulde des Stützteils oder Stützelements kontinuierlich ineinander übergehen.

Das Lasttragteil weist ein Spannelement, zum Beispiel einen Riemen, insbesondere einen Zahnriemen mit einer Raste, zum Spannen der Last in einem Sinne zu dem Stützelement hin auf. Selbstverständlich kann ein derartiges Spannelement auch am Grundträger angeordnet sein und sich bis zum Lasttragteil bzw. der darauf anordenbaren Last erstrecken.

Zwar wäre es prinzipiell möglich, dass das Lasttragteil ortsfest an dem Grundträger befestigt ist, das heißt dass es bei Gebrauch und bei Nichtgebrauch des Lastenträgers stets dieselbe Stellung einnimmt. Besonders bevorzugt ist jedoch eine Faltstruktur, Schiebestruktur oder dergleichen, bei der der Lastenträger bei Nicht-Nichtgebrauch quasi zusammen gefaltet, zusammen geschoben oder dergleichen werden kann, so dass er besonders kompakt ist.

Das mindestens eine Lasttragteil ist zweckmäßigerweise mittels eines Schiebelagers und/oder eines Schwenklagers beweglich bezüglich des Grundträgers gelagert, so dass es zwischen einer Nichtgebrauchsstellung, in der es in einen Aufbewahrungsraum des Grundträgers hinein bewegt ist, und einer Gebrauchsstellung, in der das mindestens eine Lasttragteil aus dem Aufbewahrungsraum im Sinne einer Vergrößerung eines Ladebereichs des Lastenträgers heraus bewegt ist.

Besonders bevorzugt ist eine Anordnung derart, dass zwei Lasttragteile jeweils einen Bestandteil eines Lasttragteilpaars bilden. Die Lasttragteile sind mit Lagerabschnitten an dem Grundträger in einem Querabstand zueinander mittels Schwenklagern schwenkbar gelagert und zwar zwischen der erwähnten Nichtgebrauchsstellung, in der sie in einen Aufbewahrungsraum zwischen den Schwenklagern geschwenkt sind, und einer Gebrauchsstellung, in der die Lasttragteile aus dem Aufbewahrungsraum heraus geschwenkt sind. Die Tragabschnitte des Lasttragteilpaars fluchten beispielsweise miteinander. Jedenfalls erstrecken sie sich vorteilhaft entlang einer Querachse, so dass beispielsweise ein Fahrrad auf den Lasttragteilen abgestellt werden kann.

Die Lagerung kann so getroffen sein, dass die Lasttragteilpaare stets die Richtung der Querachse einnehmen, nämlich in der Nichtgebrauchsstellung und in der Gebrauchsstellung. Bevorzugt ist jedoch eine besonders kompakte Ausführungsform, bei der der Tragabschnitt mindestens eines der Lasttragteile in der Nichtgebrauchsstellung in dem Aufbewahrungsraum in einer Schräglage angeordnet ist, in der seine Längsachsrichtung in einem schrägen Winkel zu der Querachse verläuft.

An dieser Stelle sei bemerkt, dass es vorteilhaft ist, wenn die Lasttragteile eines Lasttragteilpaars in dem Aufbewahrungsraum nebeneinander zu liegen kommen, so dass die von ihnen abstehenden Stützelemente nicht hinderlich sind. Wenn die Stützelemente jedoch abgenommen werden oder besonders niedrig bauen, ist auch eine Ausführungsform möglich, bei der beispielsweise die Lasttragteile eines Lasttragteilpaars in der Nichtgebrauchsstellung aufeinander zu liegen kommen.

Weiterhin ist es möglich, dass beispielsweise nur eines der Lasttragteile ein Stützelement im Sinne der Erfindung aufweist. Gerade bei dieser Ausführungsform ist es ohne weiteres möglich, dass dieses Lasttragteil und ein weiteres, kein Stützelement aufweisendes Lasttragteile in der Nichtgebrauchsstellung in dem Aufbewahrungsraum aufeinander liegen.

Die Schwenkachse mindestens eines Schwenklagers verläuft beispielsweise in einem Winkel von mehr als 90°, z.B. 95 bis 105 Grad zu der Gebrauchsstellungsachse. Üblich ist es, wie zum Beispiel auch bei dem Lastenträger gemäß
DE 10 2007 023 495 A1 der Fall ist, das die Schwenkachse des Schwenklagers für das Lasttragteil senkrecht zur Querachse oder auch zur Längsachse des Tragabschnitts verläuft, wenn dieser in der Gebrauchsstellung steht.

Die Tragabschnitte der Lasttragteile eines Lasttragteilpaars kommen in der Nichtgebrauchsstellung zweckmäßigerweise nebeneinander in dem Aufbewahrungsraum zu liegen. Dabei ist es möglich, dass die Tragabschnitte in einem Winkel zueinander stehen. Besonders bevorzugt ist es, wenn die Tragabschnitte parallel nebeneinander in dem Aufbewahrungsraum liegen, wenn sich die Lasttragteile in der Nichtgebrauchsstellung befinden.

Die Lasttragteile eines Lasttragteilpaars befinden sich in der Nichtgebrauchsstellung zweckmäßigerweise etwa in einer gleichen Ebene, d.h. dass beispielsweise weder das eine noch das andere Lasttragteil über diese Ebene nach oben oder unten vorsteht. Dadurch baut der Lastenträger besonders kompakt, wenn er sozusagen zusammengefaltet ist, also seine Nichtgebrauchsstellung einnimmt.

Eine andere Ausführungsform kann vorsehen, dass sich die Tragabschnitte der Lasttragteile eines Lasttragteilpaars in der Nichtgebrauchsstellung in dem Aufbewahrungsraum überkreuzen.

Die Schwenkachsen der Lasttragteile verlaufen zweckmäßigerweise parallel zueinander. Weiterhin ist es vorteilhaft, wenn eine Längsposition von Achselementen der Schwenklager, die die Schwenkachsen definieren, insbesondere eine Längsposition der Längsenden der Achselemente, quer zu der Querachse oder der Gebrauchsstellungsachse des Tragabschnitts zumindest im Wesentlichen gleich ist. In Längsrichtung liegen also die Achselemente quasi auf derselben Höhe. Das ermöglicht eine besonders Platz sparende Unterbringung der Lasttragteile in der Nichtgebrauchsstellung.

Der Grundträger kann beispielsweise als eine Schublade, eine Wanne oder dergleichen ausgestaltet sein. Auch bei dieser Bauform ist es möglich, dass der Grundträger beispielsweise Längsträger umfasst, beispielsweise Verstärkungen der Wanne, der Schublade oder dergleichen.

Eine besonders bevorzugte Ausführungsform der Erfindung sieht vor, dass der Grundträger als ein Ladegestell ausgestaltet ist und die Schwenklager der Lasttragteile an insbesondere parallel nebeneinander verlaufenden, den Aufbewahrungsraum seitlich begrenzenden Längsträgern angeordnet sind.

Längsachsen der Längsträger verlaufen zweckmäßigerweise parallel zueinander. Die Längsachsen der Längsträger verlaufen zweckmäßigerweise rechtwinkelig quer zu der Querachse oder der Gebrauchsstellungsachse des Tragabschnitts.

Die Längsachsen der Längsträger verlaufen weiterhin vorteilhaft zu einer Fahrzeuglängsrichtung des Kraftfahrzeugs bei Gebrauch des Lastenträgers an dem Kraftfahrzeug parallel. Mithin stehen die Längsträger vorteilhaft in der Art von Gabelarmen nach hinten vor das Heck des Kraftfahrzeugs vor.

Eine die Lasttragteile in der Gebrauchsstellung durchsetzende Querachse oder die Gebrauchsstellungsachse des Tragabschnitts verläuft vorteilhaft in Querrichtung bezüglich des Kraftfahrzeugs, wenn der Lastenträger am Kraftfahrzeug seine Gebrauchsstellung einnimmt.

Eine an sich eigenständige Erfindung stellt es dar, wenn ein Lastenträger gemäß Oberbegriff des Anspruches 1 dadurch gekennzeichnet ist, dass er eine Verriegelungseinrichtung zur Verriegelung mindestens eines Lasttragteils an dem Grundträger in der Gebrauchsstellung und/oder Nichtgebrauchsstellung aufweist.

Somit kann also das Lasttragteil in zumindest einer dieser Stellungen festgelegt werden, so dass er beispielsweise sich nicht mehr bewegen kann, wenn das Kraftfahrzeug fährt. Das verbessert insgesamt den Halt der Last am Grundträger und somit am Kraftfahrzeug.

Es versteht sich, dass der Begriff "Verriegelungseinrichtung" relativ weit zu verstehen ist, d.h. er kann beispielsweise auch eine Spanneinrichtung umfassen oder eine Klemmeinrichtung, mit der das Lasttragteil in der Gebrauchsstellung oder der Nichtgebrauchsstellung oder beiden Stellungen bezüglich des Grundträgers festlegbar ist.

Die Verriegelungseinrichtung umfasst zweckmäßigerweise ein in Richtung seiner das Lasttragteil bezüglich des Grundträgers verriegelnden Verriegelungsstellung federbelastetes Riegelelement. Selbsverständlich wäre es möglich, ein Riegelelement auch manuell in Richtung der Verriegelungsstellung zu Verstellen. Bevorzugt ist jedoch eine federbelastete Verriegelung. Beispielsweise drückt ein Federelement auf das Riegelelement.

Das Riegelelement kann in einer Ausführungsform, die in der Zeichnung nicht dargestellt ist, beispielsweise am Grundträger beweglich gelagert sein. Eine bevorzugte Ausführungsform sieht jedoch vor, dass das Bedienelement (es können auch mehrere vorgesehen sein) am Lasttragteil beweglich gelagert ist.

Der erfindungsgemäße Lastenträger kann als eine vom Kraftfahrzeug lösbare Komponente, beispielsweise an der Anhängekupplung befestigbare Baueinheit mit einer Klemmvorrichtung oder einer sonstigen Halteeinrichtung zum Halten an der Anhängekupplung ausgestaltet sein, aber auch einen Bestandteil eines Kraftfahrzeugs bilden, beispielsweise als eine Heckschublade ausgestaltet sein kann, die aus einem Aufnahmeraum am Heck des Kraftfahrzeugs ausziehbar ist. Selbstverständlich kann ein erfindungsgemäßer Lastenträger auch weitere Komponenten enthalten, beispielsweise einen Haltebügel oder Stützbügel zum stützen der Last, Spannelemente, insbesondere Gurte und dergleichen. Ferner ist es vorteilhaft, wenn der Lastenträger mindestens eine Leuchtenanordnung, einen Kennzeichenträger und dergleichen mehr umfasst.
- Figur 1: eine seitliche perspektivische Schrägansicht eines mit einem Fahrrad beladenen erfindungsgemäßen Lastenträgers,

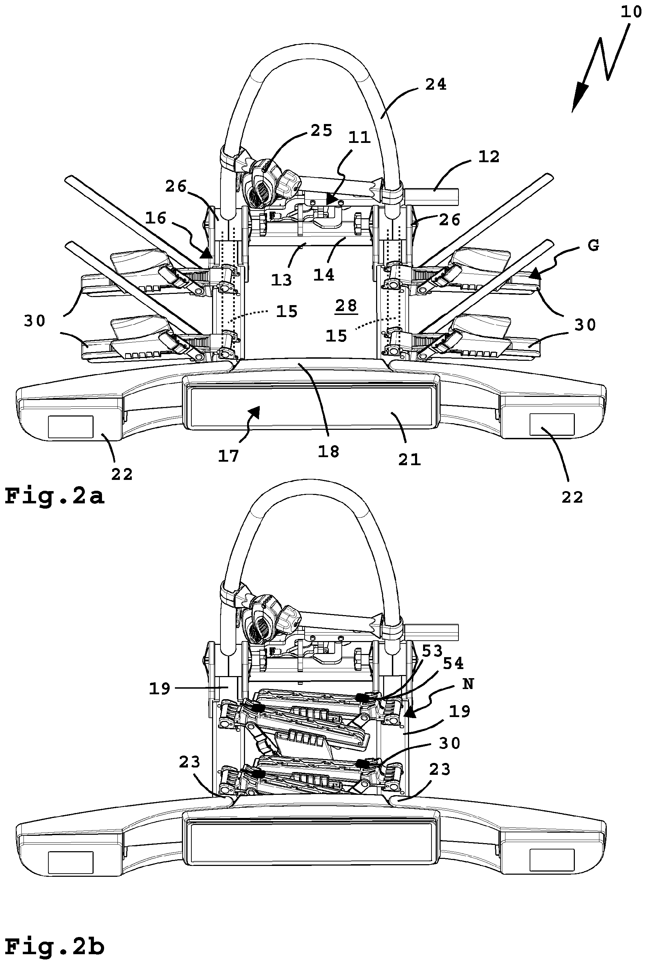

- Figur 2a: eine Schrägansicht von hinten oben auf den Lastenträger gemäß Figur 1, wobei dessen Lasttragteile eine Gebrauchsstellung einnehmen,
- Figur 2b: den Lastenträger gemäß Figur 2a mit in eine Nichtgebrauchsstellung verstellten Lasttragteile,
- Figur 3a: den Lastenträger gemäß Figur 2a senkrecht von oben,
- Figur 3b: den Lastenträger gemäß Figur 2b von oben,

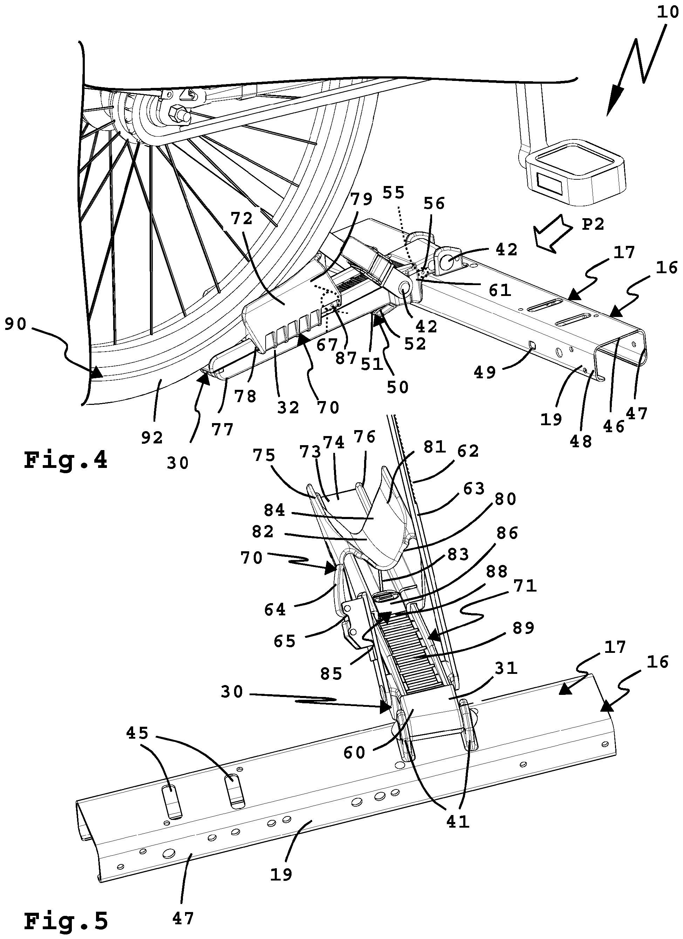

- Figur 4: eine Detailansicht eines Lasttragteils sowie eines Stützelements des Lastenträgers gemäß der vorstehenden Figuren etwa entsprechend einem Ausschnitt A in Figur 1 in einer Blickrichtung entsprechend einem Pfeil P1, und
- Figur 5: eine weitere Detailansicht ähnlich derjenigen in Figur 4, jedoch in Blickrichtung eines Pfeils P2 in Figur 4.

Ein in der Zeichnung dargestellter Lastenträger 10 ist mittels einer Halteeinrichtung 11, beispielsweise einer Klemmeinrichtung, an einer Anhängekupplung 101 eines Kraftfahrzeugs 100 lösbar befestigbar.

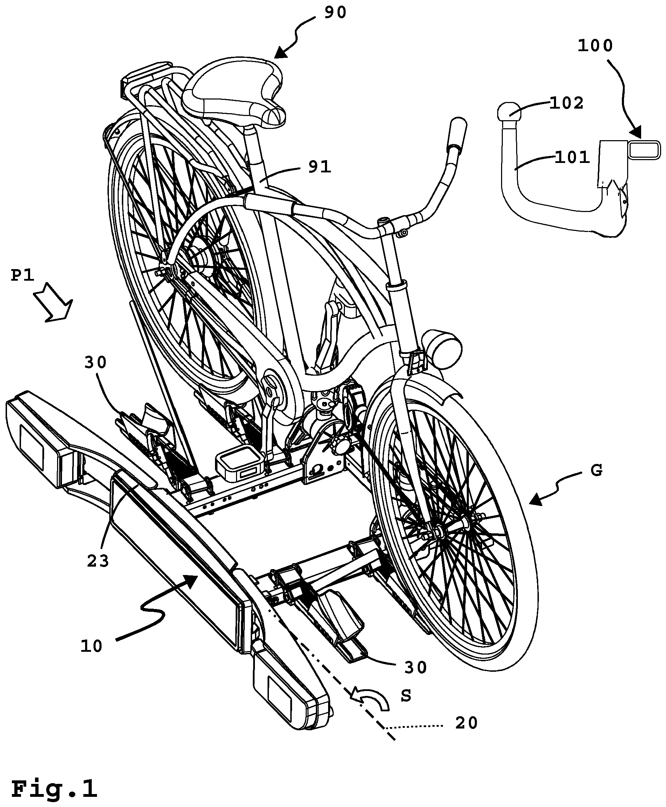

Die Halteeinrichtung 11 umfasst beispielsweise ein Klemmteil 27, das mittels eines Hebels 12 in eine einen Kugelkopf 102 oder ein sonstiges Kuppelelement der Anhängekupplung 101 klemmende Klemmstellung gebracht wird. Das Kraftfahrzeug 100 ist in Figur 1 schematisch dargestellt, wobei jedoch der Lastenträger 10 nicht am Kraftfahrzeug 100 befestigt ist.

Der Lastenträger 10 umfasst ein Grundgestell 13, an dem die Halteeinrichtung 11 angeordnet ist. Das Grundgestell 13 ist vorzugsweise U-förmig und hat einen Grundschenkel 14, von dem zwei Tragarme 15 abstehen. Das Grundgestell 13 trägt ein Ladegestell 16, das einen Grundträger 17 bildet.

Das Ladegestell 16 ist ebenfalls U-förmig und hat einen Grundschenkel 18, von dem 2 Längsträger 19 abstehen. Die Längsträger 19 liegen beim Fahrbetrieb des Lastenträgers 10 auf den Tragarmen 15 auf.

Das Ladegestell 16 ist jedoch am Grundgestell 13 in Richtung einer zum Öffnen beispielsweise einer Kofferraumklappe des Kraftfahrzeugs 100 geeigneten Ladestellung beweglich gelagert, beispielsweise schiebebeweglich und/oder schwenkbeweglich, zum Beispiel entsprechend einem Pfeil S. Beispielsweise ist ein Schwenklager im Bereich der freien Enden der Tragarme 15 und dem Grundschenkel 18 vorgesehen, dessen Schwenkachse 20 exemplarisch eingezeichnet ist.

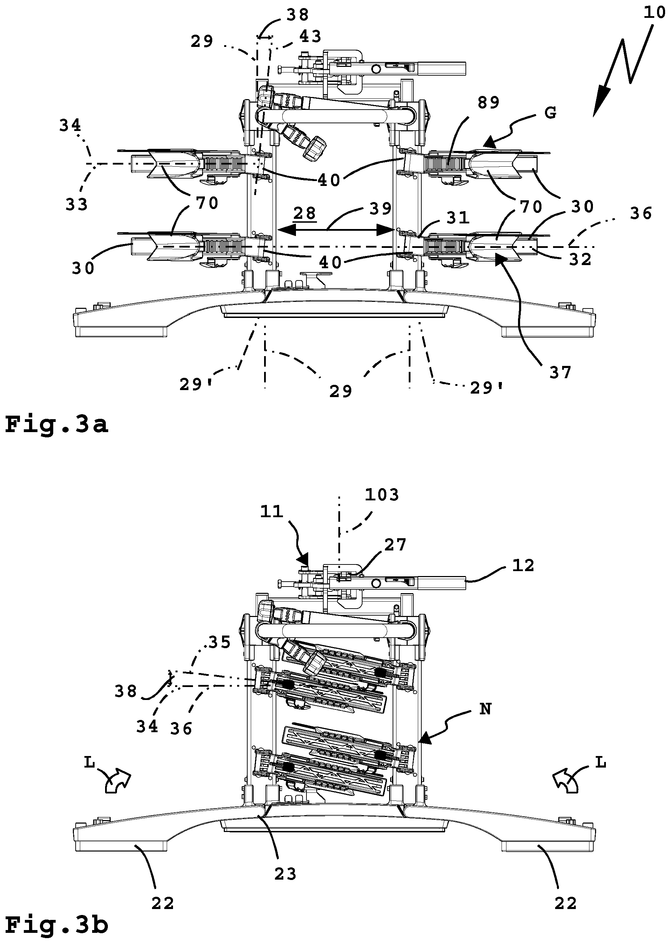

An dem Ladegestell 16, insbesondere dessen Grundschenkel 18, sind ein Kennzeichenträger 21 sowie Leuchten 22 angeordnet. Die Leuchten 22 sind mittels Schwenklagern 23 zu den Längsträgern 19 hin in eine Nichtgebrauchsstellung (Pfeile L in Figur 3b) oder von diesen Längsträgern 19 weg in eine in der Zeichnung dargestellte Gebrauchsstellung schwenkbeweglich, so dass sie etwa mit dem Grundschenkel 18, der den Kennzeichenträger 21 trägt, fluchten.

Im Bereich der freien Enden der Längsträger 19 ist eine Stütze 24 angeordnet, die bei Gebrauch des Lastenträgers 10 wie in Figur 1 dargestellt hoch steht und die Last, beispielsweise ein Fahrrad 90, stützen kann. An der Stütze 24, beispielsweise einem Haltebügel, sind Haltearme 25 beweglich gelagert, an denen sich Klemmen zum Klemmen der Last, beispielsweise eines Rahmens 91 des Fahrrads 90, befinden.

Die Stütze 24 ist zweckmäßigerweise in eine Nichtgebrauchsstellung verlagerbar, bei der sie näher bei den Längsträgern 19 befindlich ist, so dass der Lastenträger 10 bequem verstaut werden kann. Beispielsweise ist die Stütze 24 mit Schwenklagern 26 schwenkbar am Ladegestell 16 gelagert.

Durch die vorgenannten Maßnahmen ist es an sich schon möglich, eine Last, beispielsweise das Fahrrad 90, einigermaßen sicher am Lastenträger 10 zu befestigen. Auch das Verstauen des Lastenträgers 10 fällt leicht, da dessen bei Gebrauch vor das Ladegestell 16 vorstehende Komponenten, beispielsweise die Leuchten 22 und die Stütze 24, bei Nichtgebrauch zum Ladegestell 16 hin verstellbar sind.

An sich ist es auch bekannt, Lasttragteile, beispielsweise Trägerrinnen oder sonstige Trageelemente, zum Tragen der Last, beispielsweise des Fahrrads 90, beweglich am Ladegestell eines Lastenträgers zu lagern.

Bei dem Lastenträger 10 sind jedoch noch weitere Maßnahmen getroffen, die zum einen eine sichere Befestigung der Last am Lastenträger 10 verbessern, zum andern auch dazu beitragen, dass der Lastenträger 10 bei Nichtgebrauch sehr kompakt zusammen gefaltet werden kann, so dass er beispielsweise im Gepäckabteil des Kraftfahrzeugs 100 ohne weiteres abgelegt werden kann.

An dem Grundträger 17 sind mehrere, vorliegend 4, Lasttragteile 30 beweglich gelagert. Beispielsweise sind einander gegenüberliegend an den Längsträgern 19 jeweils zwei Lasttragteile 30 schwenkbeweglich gelagert, wobei jeweils zwei einander gegenüberliegende Lasttragteile 30 ein Lasttragteilpaar 37 bilden. Die Lasttragteile 30 können zwischen die beiden Längsträger 19 hinein geschwenkt werden, so dass sie sich in einem Aufbewahrungsraum 28 befinden. Die beiden Längsträger 19 begrenzen in ihrem Querabstand 39 den Aufbewahrungsraum 28. Die in dem Aufbewahrungsraum 28 befindlichen Lasttragteile 30 nehmen dann ihre Nichtgebrauchsstellung N ein.

Die Lasttragteile 30 sind jedoch nach außen vor die Längsträger 19 vor schwenkbar, so dass sie zum Tragen der Last, beispielsweise dem Fahrrad 90, ihre Gebrauchsstellung G einnehmen.

Die Lasttragteile 30 weisen jeweils einen Lagerabschnitt 31 und einen zum Tragen der Last geeigneten Tragabschnitt 32 auf. Der Tragabschnitt 32 hat eine Längsgestalt und erstreckt sich in einer Längserstreckungsrichtung 33.

Die Längserstreckungsrichtung 33 verläuft entlang einer Gebrauchsstellungsachse 34, wenn die Lasttragteile 30 ihre Gebrauchsstellung G einnehmen. In der Nichtgebrauchsstellung N verlaufen die Tragabschnitte 32 mit ihrer Längserstreckungsrichtung 33 jedoch um einen Schrägstellwinkel 38 schräg zur Gebrauchsstellungsachse 34 und nehmen eine Nichtgebrauchsstellungsachse 35 ein. In der Gebrauchsstellung G fluchten die Lasttragteile 30 derart miteinander, dass ihre jeweiligen Längserstreckungsachsen (in der Längserstreckungsrichtung 33) koaxial sind oder zumindest etwa so parallel verlaufen, dass die Lasttragteile 30 bzw. deren Tragabschnitte 32 entlang einer Querachse 36 verlaufen. Somit können beispielsweise die Räder 92 des Fahrrades 90 auf die Tragabschnitte 32 eines Lasttragteilpaars 37 aufgestellt werden.

Die Lasttragteile 30 sind mittels Schwenklagern 40 schwenkbar an den Längsträgern 19 gelagert. Die Schwenklager 40 umfassen Lagerböcke 41, die nach oben vor die Längsträger 19 vorstehen. Beispielsweise sind an den Längsträgern 19 Durchbrüche 45 vorgesehen, durch die die Lagerböcke 41 nach oben vor die Oberseite der Längsträger 19 vorstehen können. An der Unterseite der Längsträger 19 sind die Lagerböcke 41 entsprechend befestigt, beispielsweise vernietet, verschraubt oder verschweißt.

An den Lagerböcken 41 sind Achselemente 42 gehaltert oder, die durch in der Zeichnung nicht sichtbare Bohrungen oder Durchgangsöffnungen eine den Lagerabschnitten 31 durchgesteckt sind. Selbstverständlich können auch integral an den Lagerabschnitten 31 Achsvorsprünge vorgesehen sein, die in entsprechende Lagerbohrungen an den Lagerböcken 41 schwenkbar aufgenommen sind. an ihren äußeren Enden haben die Achselemente 42 an der Außenseite der Lagerböcke 41 angeordnete Köpfe.

Im Querschnitt sind die Längsträger 19 U-förmig, worauf es jedoch nicht ankommt. Die Durchbrüche 45 sind beispielsweise an oberen Wänden 46 der Längsträger 19 vorgesehen, von denen Seitenschenkel 47 und 48 abstehen. Die Seitenschenkel 47 sind an einander zugewandten Innenseiten der Längsträger 19 vorgesehen, während die Seitenschenkel 48 die Außenseiten der Längsträger 19 bilden.

Die Lasttragteile 30 sind an den Schwenklagern 40 um durch die Achselemente 42 verlaufende Schwenkachsen 43 schwenkbar gelagert. Die Schwenkachsen 43 verlaufen in dem Schrägstellwinkel 38 schrägwinkelig zu Längsachsen 29 der Längsträger 19. Die Längsachsen 29 verlaufen vorzugsweise parallel zu einer Fahrzeuglängsachse 103 des Kraftfahrzeugs 100.

Der Schrägstellwinkel 38 beträgt z.B. 5 bis 15 Grad, zweckmäßigerweise etwa 8 Grad, wobei auch andere Schrägstellwinkel bei erfindungsgemäßen Lastenträgern möglich sind, z.B. 2 bis 45 Grad oder dergleichen.

Es versteht sich, dass auch zueinander winkelige Längsachsen 29' möglich sind, z.B. einem Winkel von 5 bis 15 Grad.

Dennoch ist durch einen zwischen dem Lagerabschnitt 31 und dem Tragabschnitt 32 eines jeweiligen Lasttragteils 30 vorhandenen Winkel, der dem Schrägstellwinkel 38 entspricht, gewährleistet, dass Tragabschnitte 32 in der Gebrauchsstellung G zu den Längsachsen 29 nicht in einem Winkel ungleich 90° zueinander stehen, sondern einen Winkel von 90° zu den Längsachsen 29 haben.

Weiterhin sind die Gebrauchsstellungsachsen 34 in Richtung der Querachse 36 orientiert, das heißt dass die Lasttragteile 30 eines jeweiligen Lasttragteilpaars 37 entlang einer gemeinsamen Querachse 36 in der Gebrauchsstellung G miteinander fluchten.

Die Lasttragteile 30 sind entsprechend einer an sich eigenständigen Erfindung bezüglich des Grundträgers 17 festlegbar, insbesondere verriegelbar. Eine Verriegelungseinrichtung 50 umfasst beispielsweise ein Rastteil 51, das einen Betätigungsschenkel 52 und einen Verriegelungsschenkel 53 mit einem Verriegelungsvorsprung 54 umfasst. Der Verriegelungsvorsprung 54 greift in seiner Verriegelungsstellung in eine Verriegelungsausnehmung 49 am Grundträger 17 ein.

Jedem der Lasttragteile 30 ist eine Verriegelungsausnehmung 49 zugeordnet.

Das Rastteil 51 ist mittels einer Feder 55, beispielsweise einer Schenkelfeder, in Richtung seiner Verriegelungsstellung federbelastet.

Die Rastteile 51 sind um eine Schwenkachse 56 schwenkbar an den Lasttragteilen 30 schwenkbar gelagert.

Die Feder 55 ist einerseits am Rastteil 51 abgestützt, andererseits an dem Grundkörper des Lasttragteils 30. Die Feder 55 belastet das Rastteil 51 derart, dass es um seine Schwenkachse 56 schwenkt und sein Verriegelungsvorsprung 54 in Richtung der Verriegelungsausnehmung 49 federbelastet ist. Wenn also das jeweilige Lasttragteile 30 in Richtung der Gebrauchsstellung G verstellt wird, verrastet das Rastteil 51 automatisch mit dem Grundträger 17.

Die Lasttragteile 30 haben im Bereich ihrer Lagerabschnitte 31 einen vorstehenden, von den Achselementen 42 durchsetzten Tragschenkel 60 sowie einen winkelig nach unten von dem Tragschenkel 60 abstehenden Stützschenkel 61. Der Tragschenkel 60 liegt in der Gebrauchsstellung G auf der Oberseite des Längsträgers 19 auf, also auf der oberen Wand 46, während der Stützschenkel 61 sich seitlich am Längsträger 19, also am Seitenschenkel 48 abstützt.

In den Tragabschnitten 32 ist eine Aufnahme-Ausnehmung für ein jeweiliges Rastteil 51 vorgesehen, beispielsweise in Gestalt eines Schlitzes. Die Rastteile 51 sind etwa quer mittig in den Lasttragteilen 30 schwenkbeweglich aufgenommen. Der Betätigungsschenkel 52 weist beispielsweise eine Druckplatte oder eine sonstige Handhabe auf, die ein Bediener in Richtung des Lasttragteils 30 drückt, um dieses zu entriegeln.

Es versteht sich, dass beispielsweise ein vorzugsweise in Längserstreckungsrichtung 33 orientierter verschiebbarer Riegel oder ein sonstiges Verriegelungsbauteil ohne weiteres ebenfalls zur Verriegelung eines Lasttragteils 30 möglich wäre. Selbstverständlich könnte auch ein Verriegelungselement direkt am Grundgestell des Lastenträgers 10, beispielsweise am Grundträger 17 vorgesehen sein, der das jeweilige Lasttragteile 30 in der Nichtgebrauchsstellung N und/oder der Gebrauchsstellung G verriegeln kann.

Die auf den Lasttragteilen 30 abgestellte Last, beispielsweise das Rad 92, kann mittels Spannelementen 62 verspannt werden, die beispielsweise einen Riemen 63 umfassen, der zugfest mit beispielsweise dem Lagerabschnitt 31 oder, was vorliegend realisiert ist, mit dem Tragabschnitt 32 verbunden ist. Der Riemen 63 ist beispielsweise am dem Lagerabschnitt 31 zugewandten Endbereich des Tragabschnitts 32 festgelegt, vorzugweise mittels eines Schwenklagers. Der Riemen 63 kann um das Rad 92 herum geschlungen werden und ist dann mittels einer Rasthalterung 64 verrastbar. Die Rasthalterung 64 umfasst beispielsweise eine federbelastete Raste 65. Der Riemen 63 weist in an sich bekannter Weise eine Zahnung auf, die mit der Raste 65 verrastbar ist.

Die Spannelemente 62 können ohne weiteres unmittelbar an den Lasttragteilen 30 angeordnet sein, da diese ihrerseits wiederum mit den Verriegelungseinrichtungen 50 in der Gebrauchsstellung G am Grundträger 17 verriegelbar sind. Somit sorgen also die vorgenannten Komponenten (Verriegelungseinrichtung 50 und Spannelemente 62) schon dafür, dass die Last am Lastenträger 10 sicher gehalten wird. Eine weitere Maßnahme zur sicheren Befestigung der Last bilden nachfolgend erläuterte Stützelemente 70.

Die Stützelemente 70 dienen zur Abstützung einer auf dem Lastenträger 10 abgestellten Last. Die Stützelemente 70 sind längsverschieblich, nämlich entlang der Längserstreckungsrichtung 33, an den Lasttragteilen 30 gelagert, so dass sie in eine die jeweilige Last, beispielsweise das Rad 92, optimal abstützende Stellung verstellt werden können. Eine Führungseinrichtung 71 zur Führung der Stützelemente 70 ist als eine lineare Führung ausgestaltet (wobei selbstverständlich auch andere Führungsbahnen möglich sind, beispielsweise gebogene Führungsbahnen).

Die Tragabschnitte 32 sind als Rinnen 73 ausgestaltet, von deren Nutboden oder Grundschenkel 74 zwei seitliche, quasi eine Mulde definierende Seitenschenkel 75 nach oben (bezüglich der Gebrauchsstellung G) abstehen. In die Rinne 73 kann beispielsweise das Rad 92 eingestellt werden, das dann in an sich bekannter Weise von den Seitenschenkeln 75 seitlich abgestützt wird.

Die Seitenschenkel 75 bilden, jedenfalls im Bereich ihrer oberen Stützabschnitte, Führungskonturen 76 der Führungseinrichtung 71. Die Seitenschenkel 75 stehen seitlich vor einen Grundkörper 77 der Tragabschnitte 32 vor, so dass sie von Führungskonturen 78 der Stützelemente 70 umgriffen werden können oder derart in den Führungskonturen 78 aufgenommen sind, dass die Stützelemente quer zu der Längserstreckungsrichtung 33 gegenüber den Lasttragteilen 30 unverlierbar sind.

Die Führungskonturen 78 sind an Seitenabschnitten 79 eines Stützkörpers 72 der Stützelemente 70 ausgebildet. Die Führungskonturen 78 sind einander gegenüberliegend offen. Beispielsweise kann ein Stützelement 70 von den freien Enden der Lasttragteile 30 her auf die Führungskonturen 76 aufgeschoben werden.

Zwischen den Seitenabschnitten 79 des Stützkörpers 72 befindet sich ein Tragabschnitt 80 des Stützkörpers 72. Der Tragabschnitt 80 weist eine Aufnahmemulde 81 zur Aufnahme des Rades 92 auf.

Die Aufnahmemulde 81 ist relativ tief, so dass das Rad 92 weit in die Aufnahmemulde 81 eingreifen kann und durch diese optimal seitlich abgestützt ist. Unterhalb eines Bodens 82 der Aufnahmemulde 81 ist vorzugsweise noch eine Stütze 83 vorgesehen, beispielsweise eine Stützrippe. Es ist vorteilhaft, dass Seitenwände 84 der Aufnahmemulde 81, die sich vom Boden 82 zu den Tragabschnitten 80 hin erstrecken, eine optimale seitliche Abstützung des Rades 92 gewährleisten.

Der Stützkörper 72 ist - wie übrigens auch andere Stützelemente oder Stützkörper eines erfindungsgemäßen Lastenträgers - zweckmäßigerweise im Wesentlichen als ein Hohlkörper ausgebildet, so dass er besonders leicht ist. Selbstverständlich können auch Schlitze oder sonstige Maßnahmen vorgesehen sein, um den Stützkörper 72 noch etwas leichter auszugestalten.

Der Boden 82 der Aufnahmemulde 81 und der Boden der Rinne 73 fluchten miteinander, so dass ein relativ großer Bereich des Außenumfang des Rades 92 abgestützt ist. Der Boden der Rinne 73 verläuft in der Gebrauchsstellung G nach schräg unten außen geneigt. Bereits dadurch erhält das Rad 92 eine gewisse Abstützung von der Seite der Längsträger 19 her gesehen. Zusätzlich kommt noch die Abstützung durch die Aufnahmemulde 81 hinzu. Der Boden der Rinne 73 und der Boden 82 der Aufnahmemulde 81 verlaufen winkelig zueinander, so dass das Rad 92 durch zueinander winkelige Stützflächen (Boden der Rinne 73 und Boden 82 der Aufnahmemulde 81) abgestützt ist.

Zu einem zuverlässigen Halt des Stützelements 70 am Lasttragteil 30 dient eine Halteeinrichtung 85. Die Halteeinrichtung 85 umfasst ein Rastelement 86, das beweglich am Stützelement 70 gelagert ist. Beispielsweise ist das Rastelement 86 in der Art einer Wippe ausgestaltet. Das Rastelement 86 ist mittels eines Schwenklagers 87 zwischen den die Führungskonturen 78 aufweisenden unteren Abschnitten der Seitenabschnitte 79 schwenkbeweglich um eine Schwenkachse quer zur Längserstreckungsrichtung 33, die zugleich die Führungsachse der Führungseinrichtung 71 darstellt, gelagert.

Das Rastelement 86 greift mit einem Rastvorsprung 88 in Zähne einer Zahnreihe 89 ein, die sich zwischen den Seitenschenkeln 75 der Rinne 73 erstreckt. Somit ist es möglich, das Rastelement 86 in unterschiedlichen Längspositionen zu verrasten, so dass der Stützkörper 72 direkt unter einen Außenumfang des Rades 92 geschoben werden kann und dieses Rad 92 optimal stützt. In der jeweiligen Längsposition rastet der Rastvorsprung 88 zwischen Zähne der Zahnreihe 89 ein, so dass das Stützelement 70 bezüglich seiner Längsverschieberichtung ortsfest festgelegt ist.

Eine Neigung der Zähne der Zahnreihe 89 ist dabei so getroffen, dass das Stützelement 70 zum Rad 92 oder in Richtung der freien Enden der Lasttragteile 30 hin ohne zusätzlichen Bedienereingriff hin verschoben werden kann und dort automatisch verrastet. In Gegenrichtung hingegen muss der Bediener eine Bedienhandlung vornehmen, indem er das Rastelement 86 aus der Verrastung mit der Zahnreihe 89 löst. Dazu kann er beispielsweise eine der dem Rastvorsprung 88 entgegengesetzten Seite auf eine Bediener-Vertiefung des Rastelemente 86 drücken, so dass der Rastvorsprung 88 außer Eingriff mit der Zahnreihe 89 gelangt und das Stützelement 70 in einer Richtung von dem freien Ende des Lasttragteils 30 weg, d.h. zum Grundträger 17 hin, verschoben werden kann.

In der Gebrauchsstellung G stehen die Stützelemente 70 relativ weit nach oben vor die Oberseite der Lasttragteile 30 vor. Aufgrund der schrägen Orientierung der Schwenkachsen 43 relativ zu den Längsachsen 29 der Längsträger 19 ist es möglich, die Lasttragteile 30 nebeneinanderliegend und schräg in dem Aufbewahrungsraum 28 unterzubringen, in dem die Stützelemente 70 in der Nichtgebrauchsstellung N nach unten orientiert sind. Die Stützelemente 70 behindern somit das Verstellen der Lasttragteile 30 in die Nichtgebrauchsstellung N nicht.

Das Rastelement 86 ist in seine Raststellung bzw. Verriegelungsstellung federbelastet, beispielsweise durch eine Feder 67. Die Feder 67 ist beispielsweise eine Schenkelfeder, die sich einerseits am Rastelemente 86, andererseits am Stützkörper 72 abstützt.

## Patentansprüche

1. Lastenträger (10) für ein Kraftfahrzeug (100), insbesondere einen Personenkraftwagen, mit einem zum Tragen einer Last (90) vorgesehenen Grundträger (17), der bei Gebrauch des Lastenträgers (10) nach hinten vor einen Heckbereich des Kraftfahrzeugs (100) vorsteht, wobei der Grundträger (17) mindestens ein Lasttragteil (30) aufweist, das einen sich entlang einer Längsachsrichtung erstreckenden, eine Längsgestalt aufweisenden Tragabschnitt (32) zum Tragen einer Last, insbesondere eines Fahrrades (90), aufweist, wobei an dem Tragabschnitt (32) ein Stützelement (70) zum Abstützen der Last, insbesondere eines Rades eines Fahrrades (90), mittels einer Führungseinrichtung (71) entlang der Längsachsrichtung verschieblich geführt ist, so dass das Stützelement (70) in eine zum Abstützen der Last (90) geeignete Längsposition entlang der Längsachsrichtung verstellbar ist, und wobei das Stützelement (70) mittels einer Halteeinrichtung (85) an dem Lasttragteil (30) in unterschiedlichen Längspositionen bezüglich der Längsachsrichtung des Tragabschnitts (32) festlegbar ist, **dadurch gekennzeichnet, dass** die Halteeinrichtung (85) mindestens eine Raste (86) und/oder einen Riegel und/oder eine Klemme umfasst und dass ein Spannelement (62) zum Spannen der Last (90) in einem Sinne zu dem Stützelement (70) hin an dem Lasttragteil (30) ortsfest angeordnet ist oder an dem Grundträger (17) angeordnet ist und sich bis zum Lasttragteil (30) bzw. der darauf anordenbaren Last (90) erstreckt.

2. Lastenträger nach Anspruch 1, **dadurch gekennzeichnet, dass** die mindestens eine Raste (86) oder der mindestens eine Riegel oder die mindestens eine Klemme in eine das Stützelement (70) bezüglich des Tragabschnitts (32) festlegende Rastposition oder Verriegelungsposition oder Klemmposition federbelastet ist.

3. Lastenträger nach einem der Ansprüche 1 oder 2, **dadurch gekennzeichnet, dass** die Halteeinrichtung (85) mindestens eine insbesondere in der Längsachsrichtung verlaufende Zahnreihe (89) zur Verrastung mit der Raste (86) umfasst.

4. Lastenträger nach Anspruch 3, **dadurch gekennzeichnet, dass** die Zahnreihe (89) neben einer Führungskontur (76) der Führungseinrichtung (71) oder zwischen Führungskonturen (76) der Führungseinrichtung (71) verläuft.

5. Lastenträger nach Anspruch 3 oder 4, **dadurch gekennzeichnet, dass** die Zahnreihe (89) eine Zahnung mit einer Sägezahnstruktur aufweist derart, dass die Raste (86) mit der Zahnung bei einem Verstellen des Stützelements (70) in einem Sinne von der Last (90) weg mit der Zahnung selbsttätig, insbesondere federbelastet, verrastet, während die Raste (86) über die Zahnung bei einem Verstellen des Stützelements (70) in einem Sinne hin zu der Last (90) gleitet.

6. Lastenträger nach einem der vorhergehenden Ansprüche, **dadurch gekennzeichnet, dass** der Tragabschnitt (32) eine Tragabschnitt-Stützfläche und das Stützelement (70) eine Stützelement-Stützfläche aufweisen, wobei die Stützflächen als Ganzes oder zumindest abschnittsweise eine Schrägneigung relativ zueinander aufweisen.

7. Lastenträger nach einem der vorhergehenden Ansprüche, **dadurch gekennzeichnet, dass** das mindestens eine Lasttragteil (30) eine Rinne (73) zur Aufnahme der Last aufweist, wobei von einem Rinnenboden Seitenschenkel (75) abstehen.

8. Lastenträger nach Anspruch 7, **dadurch gekennzeichnet, dass** die Seitenschenkel (75) der Rinne (73) des Lasttragteils (30) Führungskonturen (76) der Führungseinrichtung (71) bilden.

9. Lastenträger nach einem der vorhergehenden Ansprüche, **dadurch gekennzeichnet, dass** das Stützelement (70) eine insbesondere in einer Ebene, in der die Längsachse liegt, runde Aufnahmemulde (81) aufweist und/oder einen Stützkeil umfasst.

10. Lastenträger nach Anspruch 9, **dadurch gekennzeichnet, dass** ein Boden (82) der Aufnahmemulde (81) des Stützelements (70) und der Rinnenboden (73) des Lasttragteils (30) miteinander fluchten.

11. Lastenträger nach einem der vorhergehenden Ansprüche, **dadurch gekennzeichnet, dass** das Spannelement ein Riemen ist.

12. Lastenträger nach einem der vorhergehenden Ansprüche, **dadurch gekennzeichnet, dass** das mindestens eine Lasttragteil (30) mittels eines Schiebelagers und/oder Schwenklagers (40) beweglich bezüglich des Grundträgers (17) gelagert ist, so dass es zwischen einer Nichtgebrauchsstellung (N), in der es in einen Aufbewahrungsraum (28) des Grundträgers (17) hinein bewegt ist, und einer Gebrauchsstellung (G) beweglich ist, in der das mindestens eine Lasttragteil (30) aus dem Aufbewahrungsraum (28) im Sinne einer Vergrößerung eines Ladebereichs des Lastenträgers (10) heraus bewegt ist.

13. Lastenträger nach Anspruch 12, **dadurch gekennzeichnet, dass** das mindestens eine Lasttragteil (30) zusammen mit einem weiteren Lasttragteil (30) einen Bestandteil eines Lasttragteilpaars (37) bildet, deren Lasttragteile (30) jeweils einen Lagerabschnitt (31) aufweisen, wobei die Lasttragteile (30) mit ihren Lagerabschnitten (31) an dem Grundträger (17) in einem Querabstand (39) zueinander mittels Schwenklagern (40) schwenkbar zwischen einer Nichtgebrauchsstellung (N), in der die Lasttragteile (30) in einen in dem Querabstand (39) vorhandenen Aufbewahrungsraum (28) geschwenkt sind, und einer Gebrauchsstellung (G) gelagert sind, in der die Lasttragteile (30) aus dem Aufbewahrungsraum (28) zur Vergrößerung des Ladebereichs heraus geschwenkt sind und sich die Tragabschnitte (32) eines jeweiligen Lasttragteilpaars (37), insbesondere miteinander fluchtend, entlang einer Querachse (36) erstrecken, wobei der Tragabschnitt (32) mindestens eines der Lasttragteile (30) in der Nichtgebrauchsstellung (N) in dem Aufbewahrungsraum (28) in einer Schräglage angeordnet ist, in der seine Längsachsrichtung in einem schrägen Winkel (38) zu der Querachse (36) verläuft.

## Claims

1. Load support (10) for a vehicle (100), in particular a passenger car, with a base support (17) provided for supporting a load (90), which when the load support (10) is in use projects rearwards from a tail region of the vehicle (100), wherein the base support (17) comprises at least one load bearing part (30), which comprises a longitudinally shaped supporting section (32) extending along a longitudinal direction for supporting a load, in particular a bicycle (90), wherein a supporting element (70) for supporting the load, in particular a wheel of a bicycle (90), is displaceably guided on the supporting section (32) by means of a guide device (71) along the longitudinal axial direction, so that the supporting element (70) can be adjusted along the longitudinal axial direction in a longitudinal position suitable for supporting the load (90), and wherein the supporting element (70) can be fixed by means of a holding device (85) on the load bearing part (30) in different longitudinal positions with respect to the longitudinal axial direction of the supporting section (32), **characterised in that** the holding device (85) comprises at least one catch (86) and/or a bolt and/or a clip and that a clamping element (62) for clamping the load (90) in such a way to the supporting element (70) is fixedly arranged on the load bearing part (30) or on the base support (17) and extends as far as the load bearing part (30) or as far as the load (90) that can be arranged thereon.

2. Load support according to Claim 1, **characterised in that** the at least one catch (86) or the at least one bolt or the at least one clip is spring-loaded into a catch position or locking position or clamping position specifying the supporting element (70) with respect to the supporting section (32).

3. Load support according to either of Claims 1 and 2, **characterised in that** the holding device (85) comprises at least one row of teeth (89) extending in particular in the longitudinal axial direction for the locking engagement with the catch (86).

4. Load support according to Claim 3, **characterised in that** the row of teeth (89) runs between a guide contour (76) of the guide device (71) or between guide contours (76) of the guide device (71).

5. Load support according to Claim 3 or 4, **characterised in that** the row of teeth (89) has a serration with a saw-tooth structure so that the catch (86) automatically lockingly engages, in particular in a spring-loaded manner, with the serration when the supporting element (70) is adjusted in a direction away from the load (90), while the catch (86) slides over the serration when the supporting element (70) is adjusted in a direction towards the load (90).

6. Load support according to any one of the preceding claims, **characterised in that** the supporting section (32) has a supporting section support surface and the supporting element (70) has a supporting element support surface, wherein the support surface as a whole or at least in some sections are inclined relative to one another.

7. Load support according to any one of the preceding claims, **characterised in** the at least one load bearing part (30) has a groove (73) for accommodating the load, wherein side arms (75) project from a floor of the groove.

8. Load support according to Claim 7, **characterised in that** the side arms (75) of the groove (73) of the load bearing part (30) form guide contours (76) of the guide device (71).

9. Load support according to any one of the preceding claims, **characterised in that** the supporting element (70) comprises a round accommodation recess (81) in particular in a plane in which the longitudinal axis lies, and/or includes a supporting wedge.

10. Load support according to Claim 9, **characterised in that** a floor (82) of the accommodation recess (81) of the supporting element (70) and the groove floor (73) of the load bearing part (30) are flush with one another.

11. Load support according to any one of the preceding claims, **characterised in that** the clamping element is a belt.

12. Load support according to any one of the preceding claims, **characterised in that** the at least one load bearing part (30) is moveably mounted with respect to the base support (17) by means of a sliding bearing and/or swivel bearing (40), so that it can be moved between a non-use position (N), in which it is moved into a storage space (28) of the base support (17), and an in-use position (G), in which the at least one load bearing part (30) is moved out from the storage space (22) in the sense of an enlargement of a loading area of the load support (10).

13. Load support according to Claim 12, **characterised in that** at least one load bearing part (30) together with a further load bearing part (30) forms a constituent part of a pair of load bearing parts (37), whose load bearing parts (30) respectively have a bearing section (31), wherein the load bearing parts (30) with their bearing sections (31) on the base support (17) can be swivelled in a transverse spacing (39) with respect to one another by means of swivel bearings (40) between a non-use position (N), in which the load bearing parts (30) are swivelled into a storage space (28) present in the transverse spacing (39), and are stored in an in-use position (G), in which the load bearing parts (30) are swivelled out from the storage space (28) in order to enlarge the loading area, and the supporting sections (32) of a respective load bearing part pair (37) extend, in particular flush with one another, along a transverse axis (36), wherein the supporting section (32) of at least one of the load bearing parts (30) in the non-use position (N) is arranged in an inclined position in the storage space (28), in which its longitudinal axial direction runs at an acute angle (38) to the transverse axis (36).

## Revendications

1. Support de charge (10) pour un véhicule automobile (100), en particulier un véhicule personnel, avec un support de base (17) prévu pour le support d'une charge (90), qui dépasse lors de l'utilisation du support de charge (10) vers l'arrière d'une zone arrière du véhicule automobile (100), dans lequel le support de base (17) présente au moins une partie de support de charge (30) qui possède une section de support (32) présentant une forme longitudinale, s'étendant le long d'une direction de l'axe longitudinal pour le support d'une charge, en particulier d'une bicyclette (90), dans lequel sur la section de support (32), un élément d'appui (70) est guidé de manière mobile pour l'appui de la charge, en particulier d'une roue d'une bicyclette (90), à l'aide d'un dispositif de guidage (71) le long de la direction de l'axe longitudinal, de sorte que l'élément d'appui (70) soit réglable dans une position longitudinale appropriée à l'appui de la charge (90) le long de la direction de l'axe longitudinal, et dans lequel l'élément d'appui (70) peut être fixé à l'aide d'un dispositif de retenue (85) sur la partie de support de charge (30) dans différentes positions longitudinales par rapport à la direction de l'axe longitudinal de la section de support (32), **caractérisé en ce que** le dispositif de retenue (85) comporte au moins un cran (86) et/ou un verrou et/ou une pince et **en ce qu'**un élément de serrage (62) est agencé fixement pour le serrage de la charge (90) dans un sens vers l'élément d'appui (70) sur la partie de support de charge (30) ou est agencé sur le support de base (17) et s'étend jusqu'à la partie de support de charge (30) ou la charge pouvant être agencée dessus (90).

2. Support de charge selon la revendication 1, **caractérisé en ce que** l'au moins un cran (86) ou l'au moins un verrou ou l'au moins une pince est sollicité(e) par ressort dans une position d'encliquetage ou position de verrouillage ou position de serrage fixant l'élément d'appui (70) par rapport à la section de support (32).

3. Support de charge selon l'une des revendications 1 ou 2, **caractérisé en ce que** le dispositif de retenue (85) comporte au moins une rangée de dents (89) s'étendant en particulier dans le sens axial longitudinal pour l'encliquetage avec le cran (86).

4. Support de charge selon la revendication 3, **caractérisé en ce que** la rangée de dents (89) s'étend à côté d'un contour de guidage (76) du dispositif de guidage (71) ou entre des contours de guidage (76) du dispositif de guidage (71).

5. Support de charge selon la revendication 3 ou 4, **caractérisé en ce que** la rangée de dents (89) présente une denture avec une structure en dents de scie de telle manière que le cran (86) s'encliquète avec la denture lors d'un réglage de l'élément d'appui (70) dans un sens loin de la charge (90) avec la denture automatiquement, en particulier par sollicitation par ressort alors que le cran (86) glisse sur la denture lors d'un réglage de l'élément d'appui (70) dans un sens vers la charge (90).

6. Support de charge selon l'une des revendications précédentes, **caractérisé en ce que** la section de support (32) présente une surface d'appui de section de support et l'élément d'appui (70) présente une surface d'appui d'élément d'appui, dans lequel les surfaces d'appui présentent dans l'ensemble ou au moins par section une inclinaison en biais les unes par rapport aux autres.

7. Support de charge selon l'une des revendications précédentes, **caractérisé en ce que** l'au moins une partie de support de charge (30) présente une rigole (73) pour la réception de la charge, dans lequel des branches latérales (75) dépassent d'un fond de rigole.

8. Support de charge selon la revendication 7, **caractérisé en ce que** les branches latérales (75) de la rigole (73) de la partie de support de charge (30) forment des contours de guidage (76) du dispositif de guidage (71).

9. Support de charge selon l'une des revendications précédentes, **caractérisé en ce que** l'élément d'appui (70) présente un creux de réception (81) rond, en particulier dans un plan, dans lequel l'axe longitudinal se trouve, et/ou comporte un coin d'appui.

10. Support de charge selon la revendication 9, **caractérisé en ce qu'**un fond (82) du creux de réception (81) de l'élément d'appui (70) et le fond de rigole (73) de la partie de support de charge (30) s'alignent l'un sur l'autre.

11. Support de charge selon l'une des revendications précédentes, **caractérisé en ce que** l'élément de serrage est une courroie.

12. Support de charge selon l'une des revendications précédentes, **caractérisé en ce que** l'au moins une partie de support de charge (30) est logée à l'aide d'un palier coulissant et/ou palier pivotant (40) de manière mobile par rapport au support de base (17) de sorte qu'elle soit déplacée entre une position de non-utilisation (N), dans laquelle il est déplacé dans un espace de conservation (28) du support de base (17), et une position d'utilisation (G), dans laquelle l'au moins une partie de support de charge (30) est déplacée de l'espace de conservation (28) au sens d'un agrandissement d'une zone de chargement du support de charge (10).

13. Support de charge selon la revendication 12, **caractérisé en ce que** l'au moins une partie de support de charge (30) forme, conjointement avec une autre partie de support de charge (30), un constituant d'une paire de parties de support de charge (37), dont les parties de support de charge (30) présentent une section de stockage (31), dans lequel les parties de support de charge (30) sont logées avec leurs sections de stockage (31) sur le support de base (17) à une distance transversale (39) l'une de l'autre à l'aide de paliers de pivotement (40) de manière pivotante entre une position de non-utilisation (N), dans laquelle les parties de support de charge (30) sont pivotées dans un espace de conservation (28) présent dans la distance transversale (39), et une position d'utilisation (G), dans laquelle les parties de support de charge (30) sont pivotées de l'espace de conservation (28) pour l'agrandissement de la zone de chargement et les sections de support (32) d'une paire de parties de support de charge (37) respective, en particulier s'alignant entre elles, s'étendent le long d'un axe transversal (36), dans lequel la section de support (32) au moins d'une des parties de support de charge (30) est agencée dans la position de non-utilisation (N) dans l'espace de conservation (28) dans une position oblique, dans laquelle sa direction de l'axe longitudinal s'étend dans un angle oblique (38) à l'axe transversal (36).
